# EUROPÄISCHE PATENTSCHRIFT

(11) **EP 4 158 435 B1**
(45) Veröffentlichungstag und Bekanntmachung des Hinweises auf die Patenterteilung: **28.02.2024**
(21) Anmeldenummer: 21728182.3
(22) Anmeldetag: 18.05.2021
(51) Int. Cl.: G08G 1/16, G05D 1/02

(54) **VERFAHREN ZUM AUTOMATISIERTEN BETRIEB EINES KRAFTFAHRZEUGS UND MOBILE SIGNALÜBERTRAGUNGSVORRICHTUNG ZUR DRAHTLOSEN SIGNALÜBERTRAGUNG MIT EINEM AUTOMATISIERT BETREIBBAREN KRAFTFAHRZEUG**
METHOD FOR AUTOMATED OPERATION OF A MOTOR VEHICLE AND MOBILE SIGNAL TRANSMISSION APPARATUS FOR WIRELESS SIGNAL TRANSMISSION WITH AN AUTOMATICALLY OPERABLE MOTOR VEHICLE
PROCÉDÉ DE PILOTAGE AUTOMATISÉ D'UN VÉHICULE À MOTEUR ET APPAREIL MOBILE DE TRANSMISSION DE SIGNAL POUR LA TRANSMISSION DE SIGNAL SANS FIL AVEC UN VÉHICULE À MOTEUR COMMANDABLE AUTOMATIQUEMENT

(30) Priorität: 02.06.2020 DE 102020114616
(43) Veröffentlichungstag der Anmeldung: 05.04.2023
(73) Patentinhaber: MAN Truck & Bus SE, 80995 München (DE)
(72) Erfinder: KUTTENREICH, Fabian, 80995 München (DE); SÖNTGES, Sebastian, 80335 München (DE)
(74) Vertreter: v. Bezold & Partner Patentanwälte - PartG mbB
(86) Internationale Anmeldenummer: PCT/EP2021/063101
(87) Internationale Veröffentlichungsnummer: WO 2021/244845

(56) Entgegenhaltungen:
- US-A- 4 829 442
- US-A1- 2009 140 926
- US-A1- 2016 246 302
- US-A1- 2018 096 299

## Beschreibung

Die Erfindung betrifft ein Verfahren zum automatisierten Betrieb eines Kraftfahrzeugs, wobei das Kraftfahrzeug ausgebildet ist, eine vorgegebene Abfolge von Fahrmanövern automatisiert durchzuführen, vorzugsweise in einem vom allgemeinen Straßenverkehr abgetrennten Bereich. Die Erfindung betrifft ferner eine mobile Signalübertragungsvorrichtung zur drahtlosen Signalübertragung mit einem derartigen Kraftfahrzeug.

Zum allgemeinen Stand der Technik wird zunächst verwiesen auf Dokument US 2018/0096299 A1. Das Dokument betrifft ein hybrides modulares Lager- und Entnahmesystem. Das System umfasst ein Lagerausführungssystem, das geeignet ist, einen Kommissionierplan für die Kommissionierung von Pick-to-Cart- und High-Density-Lagerartikeln zu erstellen, sowie ein AGV-Dispatching-System, das geeignet ist, ein fahrerloses Transportfahrzeug und ein fahrerloses Transportfahrzeug für die modulare Lagerabholung auf der Grundlage des Kommissionierplans zu entsenden.

Aus dem Stand der Technik sind Kraftfahrzeuge bekannt, die in einem autonomen Fahrmodus betreibbar sind, in welchem das Kraftfahrzeug mithilfe eines autonomen Fahrsystems im allgemeinen Straßenverkehr selbsttätig eine sowohl eine Längsführung als auch eine Querführung des Kraftfahrzeugs umfassende Fahrzeugführung durchführt. In der Praxis sind hierzu eine Reihe verschiedener technischer Lösungen bekannt, die auf unterschiedliche Fahrzeugsysteme, beispielsweise einen Spurhalte- und Abstandassistent, Kamerasysteme, ein GPS-System oder LIDAR-Systeme des Kraftfahrzeugs, zurückgreifen und technisch meist relativ anspruchsvoll sind. Hierbei legt das autonome Fahrsystem für den autonomen Betrieb in Abhängigkeit von einer Umfelderfassung eigenständig und dynamisch im Fahrbetrieb die Fahrmanöver fest, um von einer Startposition zu einer Zielposition zu gelangen.

Aus der Praxis sind ferner Kraftfahrzeuge, vorzugsweise Nutzfahrzeuge, bekannt, die ausgebildet sind, eine fest vorgegebene Abfolge von Fahrmanövern automatisiert durchzuführen. Derartige automatisiert betriebene Nutzfahrzeuge kommen vorwiegend in einem vom allgemeinen Straßenverkehr abgetrennten Bereich zum Einsatz, beispielsweise in einem Baustellenbereich. Automatisierte Systeme benötigen im Allgemeinen eine umfangreiche Umfelderfassung und Interpretation, sowie fortschrittliche Bahnplanungsalgorithmen um automatisierte Fahraufgaben abzubilden. Eine Änderung in der Interaktion mit der Umwelt und insbesondere der Bahnplanung erfordert Anpassungen an der Software, zumal das Verhalten fest einprogrammiert ist. Der Nachteil hiervon ist, dass das Programmieren der jeweils konkret für einen gewünschten Einsatzzweck automatisiert durchzuführenden Fahrmanöver und Fahrfunktionen Expertenwissen erfordert. Dies ist besonders nachteilig, wenn im Einsatz vor Ort, z. B. in einem Baustellenbereich, die automatisiert durchzuführenden Fahrmanöver und Fahrfunktionen vorgegeben, d. h. "programmiert" werden sollen, um z. B. den automatisierten Betrieb einzurichten oder an geänderte Verhältnisse vor Ort anzupassen, da die Arbeiter vor Ort in der Regel nicht über das notwendige Expertenwissen verfügen.

Es ist daher Aufgabe der Erfindung, eine Technik zum automatisierten Betrieb eines Kraftfahrzeugs, das ausgebildet ist, eine vorgegebene Abfolge von Fahrmanövern automatisiert durchzuführen, bereitzustellen, mit der Nachteile bekannter Techniken vermieden werden können. Die Aufgabe der Erfindung ist es insbesondere, eine weiter verbesserte und einfach an die örtlichen Gegebenheiten anpassbare Technik für einen automatisierten Betrieb von derartigen Kraftfahrzeugen bereitzustellen.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung wird ein Verfahren zum automatisierten Betrieb eines Kraftfahrzeugs bereitgestellt, wobei das Kraftfahrzeug ausgebildet ist, eine vorgegebene Abfolge, vorzugsweise von einem Nutzer vorgegebene Abfolge, von Fahrmanövern automatisiert durchzuführen. Unter einer automatisierten Durchführung von Fahrmanövern wird verstanden, dass das Kraftfahrzeug diese Fahrmanöver zumindest teilweise selbständig, ohne Fahrer bzw. ohne Fahrereingriff durchführen kann.

Das Vorgeben einer Abfolge von Fahrmanövern für den automatisierten Betrieb bedeutet, wie vorstehend bereits dargelegt wurde, dass das Kraftfahrzeug die Fahrmanöver nicht selbstständig mithilfe eines Automationssystems zum automatisierten Fahren und mithilfe einer leistungsfähigen Umfelderfassung dynamisch ermittelt, um ausgehend von einem Start zu einem Ziel zu gelangen, wie dies für den automatisierten Betrieb im herkömmlichen Straßenverkehr erforderlich ist. Vielmehr werden der konkrete automatisierte Fahrbetrieb und das Fahrverhalten, d. h. die Fahrmanöver entlang einer Sollbahn, vorab festgelegt, so dass z. B. vorab vorgegeben wird, welche Streckenabschnitte das Kraftfahrzeug innerhalb einer Baustelle automatisiert durchfahren soll, wo eine bestimmte Fahrfunktion oder ein Arbeitsschritt (Ausladevorgang, Wartevorgang etc.) durchgeführt werden soll etc.

Vorzugsweise handelt es sich bei dem Kraftfahrzeug somit nicht um ein Kraftfahrzeug, das zum eigenständigen autonomen Fahren ausgebildet ist. Anders ausgedrückt handelt es sich vorzugsweise nicht um ein Kraftfahrzeug, das mithilfe eines Automationssystems im normalen Straßenverkehr selbsttätig eine, sowohl eine Längsführung als auch eine Querführung des Kraftfahrzeugs umfassende, Fahrzeugführung durchführen kann.

Vorzugsweise ist das erfindungsgemäße Verfahren ein Verfahren zum automatisierten Betrieb des Kraftfahrzeugs in einem vom allgemeinen Straßenverkehr abgetrennten Bereich, beispielsweise in einem Baustellenbereich, oder in einem durch eine Schranken- und/oder Toranlage abgetrennten Bereich.

Durch das Vorgeben einer Abfolge von Fahrmanövern kann das Fahrverhalten, z. B. der Fahrweg, die Geschwindigkeit des Kraftfahrzeugs für den automatisierten Fahrbetrieb etc. vorab definiert werden, z. B. auch unabhängig davon, ob eine klar definierte Straße oder Fahrbahn vorhanden ist oder nicht. Der Begriff Fahrmanöver soll ferner Fahrfunktionen umfassen sowie vom Kraftfahrzeug durchzuführende Arbeitsvorgänge, z. B. einen Abladevorgang bei einem Kipplaster.

Ein Kerngedanke der Erfindung besteht nunmehr darin, zur Vorgabe von Fahrfunktionen durch einen Nutzer keine Programmierung mittels einer Software oder eines Applikationsprogramms zu verwenden, sondern stattdessen zur Vorgabe von Fahrfunktionen und Fahrmanövern einem Nutzer mehrere mobile Signalübertragungsvorrichtungen bereitzustellen, die in einer bestimmten Reihenfolge aufgestellt oder platziert werden können und die bei einem sich nähernden Kraftfahrzeug bewirken, dass das Kraftfahrzeug einen oder mehrere bestimmte Fahrmanöverbefehle ausführt. Auf diese Weise kann z. B. ein Baustellenleiter durch zweckmäßige Auswahl, Kombination und Aufstellen in einer bestimmen Reihenfolge derartiger mobiler Signalübertragungsvorrichtungen eine Abfolge von Fahrmanövern und Fahrfunktionen, die das Kraftfahrzeug automatisiert nacheinander ausführen soll, vorgeben. Der automatisierte Betrieb des Kraftfahrzeugs wird insofern durch die in einer bestimmten Reihenfolge aufgestellten Signalübertragungsvorrichtungen drahtlos (fern-)gesteuert oder zumindest zum Teil (fern-)gesteuert. Eine gewünschte Route und Verhalten des Kraftfahrzeugs kann auf diese Weise einfach durch Aufstellen derartiger mobiler Signalübertragungsvorrichtungen vorgegeben werden und ferner durch Veränderung der Aufstellung schnell und einfach verändert und angepasst werden. Das Bedienen einer Software und ein herkömmliches Programmieren dieser Fahrmanöver sind nicht zur Vorgabe des Fahrmanövers für den automatisierten Betrieb erforderlich.

Entsprechend umfasst das erfindungsgemäße Verfahren das Bereitstellen mehrerer Basis-Fahrmanöverbefehle für einen automatisierten Betrieb des Kraftfahrzeugs. Die Basis-Fahrmanöverbefehle sind zweckmäßig so gewählt, dass damit die für den gewünschten Einsatzzweck denkbaren unterschiedlichen Abfolgen von Fahrmanövern oder die möglichen Routen und Verhaltensweisen des Kraftfahrzeugs vorgegeben werden können. Die einzelnen Basis-Fahrmanöverbefehle dienen somit bildlich gesprochen als "Basisbausteine", um daraus modulartig die gewünschte Abfolge von Fahrmanövern und den gewünschten automatisierten Betrieb des Fahrzeugs durch Kombination und Aneinanderreihung der Basis-Fahrmanöverbefehle vorgegeben zu können.

Unter dem Begriff des Basis-Fahrmanövers können dabei z. B. bestimmte, mit dem Kraftfahrzeug selbst oder mit Anbauten oder mit Nebenaggregaten des Kraftfahrzeugs durchführbare Standard-Manöver, vorzugsweise Anweisungen zu Fahrmanövern, zur lokalen Navigation und Verkehrszeicheninformationen verstanden werden. Lediglich beispielhaft kann ein Basis-Fahrmanöver eine Fahrt in einer bestimmten Richtung (relativ oder absolut), mit einer bestimmten Fahrzeuggeschwindigkeit, ein Anhalten und/oder Losfahren des Kraftfahrzeugs, ein Ankippen einer Ladefläche des Kraftfahrzeugs sowie ein An- oder Ausschalten einer akustischen oder optischen Signaleinrichtung des Kraftfahrzeugs umfassen. Ein Basis-Fahrmanöver kann ferner ein Fahrmanöver umfassen, das eine Änderung des Gierwinkels und/oder eine Änderung der Fahrzeuggeschwindigkeit bewirkt. Ferner kann ein Basis-Fahrmanöverbefehl eine Aktionsanweisung umfassen, die eine Steuerung von Komponenten des Kraftfahrzeugs bewirkt, und/oder die ein Verhalten Kraftfahrzeugs, vorzugsweise dessen automatisierten Betrieb beeinflusst. Mögliche Aktionsanweisungen sind beispielsweise der Versand von Benachrichtigungen, die Parametrierung z. B. von Fahrwerksparametern, eine erhöhten Rücksicht auf detektierte Hindernisse, An-/Abschaltung von Sensorik/Aktorik des Kraftfahrzeugs. Diese Basis-Fahrmanöverbefehle werden in Form von mobilen Signalübertragungsvorrichtungen, z. B. als Radar-Responderstationen, bereitgestellt.

Entsprechend umfasst das erfindungsgemäße Verfahren ferner das Bereitstellen mehrerer mobiler Signalübertragungsvorrichtungen, die zur drahtlosen Signalübertragung mit dem Kraftfahrzeug ausgebildet sind. Jeder Signalübertragungsvorrichtung ist mindestens ein Basis-Fahrmanöverbefehl zugeordnet. Wenn dem Kraftfahrzeug ein bestimmter Basis-Fahrmanöverbefehl vorgegeben werden soll, wird entsprechend diejenige Signalübertragungsvorrichtung ausgewählt, der dieser Basis-Fahrmanöverbefehl zugeordnet ist. Ferner ist das Kraftfahrzeug ausgebildet, aus der Signalübertragung mit einer der Signalübertragungsvorrichtungen den mindestens einen zugeordneten Fahrmanöverbefehl zu bestimmen.

Mit diesen Signalübertragungsvorrichtungen, die jeweils bestimmten Basis-Fahrmanöverbefehlen zugeordnet sind, können nun auf einfache Weise vom Kraftfahrzeug automatisiert durchzuführende Fahrfunktionen vorgegeben werden:
Hierzu erfolgt zunächst ein Auswählen von Basis-Fahrmanöverbefehlen aus den mehreren bereitgestellten Basis-Fahrmanöverbefehlen, beispielsweise von denjenigen, die zur Realisierung und/oder zur Vorgabe der gewünschten Fahrtroute und des Fahrzeugverhaltens benötigt werden, und das Festlegen von deren Reihenfolge. Zusätzlich erfolgt das Auswählen von Signalübertragungsvorrichtungen aus den bereitgestellten Signalübertragungsvorrichtungen korrespondierend zu den ausgewählten Basis-Fahrmanöverbefehlen. Wenn z. B. zur Realisierung der gewünschten Fahrtroute und des Fahrzeugverhaltens dreimal der Basis-Fahrmanöverbefehl A, einmal der Basis-Fahrmanöverbefehl B und dreimal der Basis-Fahrmanöverbefehl C usw. benötigt wird, wird entsprechend dreimal eine Signalübertragungsvorrichtung, der der Basis-Fahrmanöverbefehl A zugeordnet ist, ausgewählt, einmal eine Signalübertragungsvorrichtung, der der Basis-Fahrmanöverbefehl B zugeordnet ist und zweimal eine Signalübertragungsvorrichtung, der der Basis-Fahrmanöverbefehl C zugeordnet ist.

Anschließend erfolgt ein Positionieren der ausgewählten Signalübertragungsvorrichtungen entsprechend der festgelegten Reihenfolge von Basis-Fahrmanöverbefehlen und/oder einem Soll-Fahrkorridor für den automatisierten Betrieb des Kraftfahrzeugs. Der Soll-Fahrkorridor kann eine Soll-Bahn sein oder ein vom Fahrzeug befahrbarer Bereich, der für das Fahrzeug freigegeben ist in Abgrenzung von einem nicht-zugänglichen Bereich. Beispielhaft können die Signalübertragungselemente dazu entlang oder angrenzend zu der Soll-Routenführung oder Soll-Fahrbahn aufgestellt werden und dadurch in Kombination mit dem zugeordneten Basis-Fahrmanöverbefehlen eine Leitbahn für den automatisiert zurückzulegenden Fahrweg des Kraftfahrzeugs ausbilden.

Das Auswählen von Basis-Fahrmanöverbefehlen und Festlegen von deren Reihenfolge und das Auswählen und Positionieren von Signalübertragungsvorrichtungen erfolgt durch einen Benutzer, z. B. einen Arbeiter auf der Baustelle.

Mit diesen Schritten kann eine Abfolge von automatisiert vom Kraftfahrzeug durchzuführenden Fahrmanövern vorgegeben und ohne Software von einem Nutzer "programmiert" werden. Das Kraftfahrzeug ist nun ausgebildet, aus der Drahtlos-Kommunikation mit den positionierten Signalübertragungsvorrichtungen die den Signalübertragungsvorrichtungen zugeordneten Basis-Fahrmanöverbefehle zu extrahieren und im automatisierten Betrieb entsprechend auszuführen.

Hierzu umfasst das Verfahren entsprechend ferner das Ableiten der vom Kraftfahrzeug automatisiert durchzuführenden Fahrfunktionen aus der drahtlosen Signalübertragung zwischen dem Kraftfahrzeug und den ausgewählten und positionierten Signalübertragungsvorrichtungen und den automatisierten Betrieb des Kraftfahrzeugs gemäß der abgeleiteten Fahrfunktionen. Hierbei ergibt sich die Reihenfolge der abgeleiteten Fahrfunktionen vorzugsweise aus der Positionierung der ausgewählten Signalübertragungsvorrichtungen.

Ein besonderer Vorzug dieses Ansatzes liegt, wie bereits festgestellt wurde, darin, dass eine Abfolge von gewünschten Fahrmanövern für den automatisierten Betrieb ohne großen Aufwand und insbesondere ohne Expertenwissen vorgegeben werden kann. Ferner kann die Vorgabe für den automatisierten Betrieb beispielsweise durch einen einfachen Austausch oder ein Umpositionieren von Signalübertragungsvorrichtungen an die örtlichen Gegebenheiten oder das lokale Anforderungsprofil angepasst werden. Ferner ist die Anpassung einer Routenführung von automatisierten Fahrzeugen für Benutzer durch das vorgeschlagene Verfahren besonders einfach nachvollziehbar. Insgesamt ergibt sich ein deutlich reduzierter technischer Aufwand bei der Realisierung und Anpassung eines automatisierten Betriebs von Kraftfahrzeugen.

Gemäß einer besonders vorteilhaften Ausführungsform kann das von der Signalübertragungsvorrichtung übertragene Signal eine Kennung zur Identifizierung der Signalübertragungsvorrichtung und/oder des mindestens einen zugeordneten Fahrmanöverbefehls enthalten. Zusätzlich kann das Kraftfahrzeug ausgebildet sein, den einer Signalübertragungsvorrichtung mindestens einen zugeordneten Fahrmanöverbefehl dadurch zu bestimmen, dass aus der Signalübertragung mit der entsprechenden Signalübertragungsvorrichtung die Kennung zur Identifizierung der Signalübertragungsvorrichtung und/oder des mindestens einen zugeordneten Fahrmanöverbefehls ermittelt wird. Ferner ist das Kraftfahrzeug gemäß dieser Ausführungsform ausgebildet, den dieser ermittelten Kennung zugeordneten mindestens einen Fahrmanöverbefehl anhand einer hinterlegten Zuordnung zu bestimmen. Die hinterlegte Zuordnung ordnet jeder Kennung den oder die damit codierten Fahrmanöver zu. Vorteilhaft ergibt sich eine Reduzierung des im Signal zu übertragenden Informationsgehalts. Zudem können mit diesem Ansatz auch komplexere Basis-Fahrmanöverbefehle einfach kodiert werden, so dass als Signalübertragungsvorrichtung beispielhaft ein reflektierender Radar-Responder verwendet werden kann. Insgesamt ergeben sich dadurch Vorteile in Bezug auf die Betriebssicherheit des automatisierten Betriebs des Kraftfahrzeugs. Vorzugsweise ist die Kennung im Kraftfahrzeug selbst hinterlegt. Es ist jedoch auch denkbar, dass diese fahrzeugextern in einer Datenbank gespeichert ist, auf die das Kraftfahrzeug zugreifen kann.

Gemäß einer Weiterbildung dieser besonders vorteilhaften Ausführungsform kann die Kennung zur Identifizierung der Signalübertragungsvorrichtung veränderbar sein, beispielsweise durch Veränderung des von der Signalübertragungsvorrichtung übertragenen Signals. Auf diese Weise kann die Anzahl an Signalübertragungsvorrichtungen, die vorgehalten müssen, um alle Basis-Fahrmanöverbefehle in der gewünschten Anzahl vorgeben zu können, signifikant reduziert werden. Z. B. kann die Signalübertragungseinrichtung dazu einen Schalter aufweisen, über welchen zwei der mehreren alternativen Kennungen ausgewählt werden können. Dadurch kann der automatisierte Betrieb des Kraftfahrzeugs in vorteilhafter Weise noch schneller an die lokalen Gegebenheiten angepasst werden.

Gemäß einer weiteren Ausführungsform kann der Schritt des Ableitens der vom Kraftfahrzeug automatisiert durchzuführenden Fahrfunktionen ferner die folgenden beiden Aspekte umfassen: Falls das Kraftfahrzeug zeitgleich Signale von mehreren Signalübertragungsvorrichtungen empfängt, können die empfangenen Signale ausgewertet und anhand der Auswertung eine Signalübertragungsvorrichtung als die aktuell relevante Signalübertragungsvorrichtung bestimmt werden. Beispielsweise kann anhand von Laufzeitmessungen der Signale ermittelt werden, welches die aktuell zum Kraftfahrzeug nächstliegende Signalübertragungsvorrichtung ist, und diese dann als aktuell relevante Signalübertragungsvorrichtung ausgewählt werden. Anschließend können die vom Kraftfahrzeug automatisiert durchzuführenden Fahrfunktionen aus der drahtlosen Signalübertagung zwischen dem Kraftfahrzeug und der als aktuell relevant bestimmten Signalübertragungsvorrichtung abgeleitet werden. Vorteilhaft ergibt sich eine Reduzierung der Fehleranfälligkeit des automatisierten Betriebs des Kraftfahrzeugs beim Empfang von Signalen mehrerer Signalübertragungsvorrichtungen.

In einer weiteren Ausführungsform kann das Ableiten der vom Kraftfahrzeug automatisiert durchzuführenden Fahrfunktionen eine Umfelderfassung mittels mindestens eines Umfeldsensors des Kraftfahrzeugs umfassen. Zusätzlich kann überprüft werden, ob anhand der Umfelderfassung ein Hindernis ermittelt wurde, das der Ausführung der vom Kraftfahrzeug automatisiert durchzuführenden Fahrfunktionen oder Fahrmanöver entgegensteht. Die Sicherheit des automatisierten Betriebs wird dadurch weiter erhöht. Falls beispielsweise mittels des Umfeldsensors ein Gegenstand oder eine Person detektiert wird, der oder die sich im geplanten Fahrweg gemäß dem auszuführenden Basis-Fahrmanöverbefehl befindet, kann der automatisierte Betrieb unterbrochen werden.

In einer weiteren Ausführungsform können die mehreren Basis-Fahrmanöverbefehle in unterschiedliche Klassen eingeteilt sein. Diese Klassen können Verkehrszeicheninformationen und/oder Wegpunktinformationen, die im Zusammenspiel mehrerer Signalübertragungsvorrichtungen einen Pfad definieren, und/oder Lokalisierungsinformationen und/oder Aktionsbefehle, die einen durch das Kraftfahrzeug ausgeführten Arbeitsvorgang auslösen, beispielsweise das Ankippen der Ladefläche eines als Kipplader ausgebildeten Nutzfahrzeugs, umfassen. Z. B. können Wegpunktinformationen im Zusammenspiel mehrerer Signalübertragungsvorrichtungen einen Pfad für das Kraftfahrzeug definieren. Beispielhaft können Aktionsanweisungen "Hier abkippen" beinhalten. Die Klassen erleichtern die Auswahl und Positionierung der Signalübertragungsvorrichtungen. Gemäß einer Variante dieser Ausführungsform können Signalübertragungsvorrichtungen, denen Basis-Fahrmanöverbefehle einer ersten Klasse zugeordnet sind, optisch unterscheidbar gekennzeichnet sein von Signalübertragungsvorrichtungen, denen Basis-Fahrmanöverbefehle einer anderen Klasse zugeordnet sind. Dies erleichtert das Auswählen der benötigten Signalübertragungsvorrichtungen.

In einer weiteren Ausführungsform kann die Signalübertragungsvorrichtung als elektromagnetische Strahlung übertragender Responder ausgeführt sein. Die elektromagnetische Strahlung kann im Radiofrequenzbereich, im sichtbarem Licht oder im Infrarotbereich liegen.

In einer besonders bevorzugten Ausführungsform kann die Signalübertragungsvorrichtung als Radar-Responder ausgebildet sein. Entsprechend ist das Kraftfahrzeug ausgebildet, Radarstrahlung auszusenden und das Antwortsignal des Radar-Responders zum Ableiten der durchzuführenden Fahrfunktionen auszuwerten. Der Radar-Responder kann beispielsweise als reflektierender Radar-Responder ausgebildet sein. Der Radar-Responder kann zur Identifizierung der Signalübertragungsvorrichtung und/oder zur Identifizierung des mindestens einen zugeordneten Fahrmanöverbefehls ein charakteristisches Antwortsignal oder ein charakteristisches Echo erzeugen. Dies ermöglicht eine besonders kostengünstige und robuste Ausführung.

Der Radar-Responder kann ferner als Racon ausgeführt sein. Unter dem Begriff des Racon wird eine Radarantwortbake verstanden, die ausgeführt ist, selbst aktiv Radarstrahlen in Richtung der einfallenden Strahlen zurückzusenden. Die Übertragung von Informationen mittels Radar eignet sich aufgrund ihrer gegenüber Lidar-, Kamera-, Ultraschallsensoren geringere Anfälligkeit gegenüber Verschmutzungen in besonders vorteilhafter Weise für den Baustelleneinsatz. Racons sowie Vorrichtungen zur charakteristischen Manipulation des Radarechos sind aus dem Stand der Technik bekannt, vgl. lediglich beispielhaft FR 2 553 234 A1.

In einer weiteren Ausführungsform kann die Signalübertragungsvorrichtung als Leitkegel, auch als Pylon bezeichnet, ausgeführt sein. Als Leitkegel oder Pylone ausgeführte Signalübertragungsvorrichtungen können in vorteilhafter Weise eine Doppelfunktion, nämlich die Signalübertragung und die Abgrenzung des Fahrbahnbereichs, erfüllen. Auf der Baustelle befindliche Personen können dadurch einfach und schnell den designierten Fahrweg der automatisiert betriebenen Kraftfahrzeuge erfassen.

Alternativ oder zusätzlich kann die Signalübertragungsvorrichtung einen höhenverstellbaren Signalmast aufweisen. Dies erhöht die Reichweite des durch die Signalübertragungsvorrichtung zu übertragenen Signals und die Sichtbarkeit der Signalübertragungsvorrichtung für auf der Baustelle befindliche Personen.

Alternativ oder zusätzlich kann die Signalübertragungsvorrichtung eine akustisch und/oder optisch arbeitende Warneinrichtung aufweisen. Auf der Baustelle befindliche Personen können dadurch zusätzlich informiert oder gewarnt werden, z. B. dass sie sich in einem Bereich befinden, der für den automatisierten Betrieb von Kraftfahrzeugen vorgesehen ist.

In einer weiteren Ausführungsform kann die Signalübertragungsvorrichtung Räder oder Ketten zum Verfahren und/oder einen Verfahr-Antrieb aufweisen. Die Positionierung der mobilen Signalübertragungsvorrichtungen wird dadurch erleichtert.

In einer weiteren Ausführungsform kann die Signalübertragungsvorrichtung eine Kommunikationseinrichtung aufweisen, die zur Kommunikation mit den Kommunikationseinrichtungen der anderen Signalübertragungsvorrichtungen oder einer externen Einheit ausgebildet ist. Vorteilhaft ergibt sich die Möglichkeit eines Informationsaustausches zwischen den Signalübertragungsvorrichtungen und/oder der externen Einheit.

In einer Weiterbildung der letztgenannten beiden Ausführungsformen kann der Verfahr-Antrieb ausgebildet sein, mittels über die Kommunikationseinrichtung erhaltener Steuerbefehle ferngesteuert zu werden. Dies erleichtert die Positionierung der Signalübertragungsvorrichtungen.

In einer weiteren Ausführungsform können die mehreren Signalübertragungsvorrichtungen jeweils eine Lichtschranke und/oder einen Lichtschrankenreflektor aufweisen, wobei mittels der Lichtschranken und/oder der Lichtschrankenreflektoren ein Überwachungsverbund der positionierten Signalübertragungsvorrichtungen realisierbar ist und/oder realisiert wird.

In einer weiteren Ausführungsform kann bei einem Durchschreiten des durch die Lichtschranken und/oder Lichtschrankenreflektoren realisierten Überwachungsverbunds ein optisches oder akustisches Warnsignal ausgegeben werden. Personen, die in den vorbestimmten Fahrweg der Kraftfahrzeuge gelangen, können dadurch gewarnt werden. Das Unfallrisiko wird insofern gesenkt. In einer weiteren Ausführungsform kann bei einem Durchschreiten des durch die Lichtschranken und/oder Lichtschrankenreflektoren realisierten Überwachungsverbunds ein Warnsignal an das Kraftfahrzeug übertragen werden. Beispielsweise kann die Signalübertragungsvorrichtung selbst das Warnsignal an das Kraftfahrzeug übertragen, z. B. in Form einer Veränderung der Kennung. Alternativ kann das Warnsignal von einem anderem System an das Kraftfahrzeug übertragen werden.

In einer weiteren Ausführungsform können den ausgewählten Signalübertragungsvorrichtungen jeweils eine absolute Position zugewiesen sein. Alternativ oder ergänzend kann die Signalübertragungsvorrichtung ausgebildet sein, ihre absolute Ortsposition zu erfassen und vorzugsweise an das Kraftfahrzeug zu übertragen.. Vorteilhaft kann die Signalübertragungsvorrichtung als eindeutig identifizierbare Landmarke zur Lokalisierung verwendet werden.

Gemäß einem zweiten allgemeinen Gesichtspunkt der Erfindung wird eine mobile Signalübertragungsvorrichtung bereitgestellt, die als Vorrichtung per se auch unabhängig vom Verfahren offenbart und beanspruchbar sein soll. Die mobile Signalübertragungsvorrichtung kann wie vorstehend beschrieben ausgeführt sein. Zur Vermeidung von Wiederholungen sollen rein verfahrensgemäß offenbarte Merkmale auch als vorrichtungsgemäß offenbart gelten und beanspruchbar sein. Die vorgenannten Aspekte und Merkmale, die für die mobile Signalübertragungsvorrichtung in Zusammenhang mit dem Verfahren beschrieben werden, gelten somit auch entsprechend für die Vorrichtung per se. So ist die mobile Signalübertragungsvorrichtung zur drahtlosen Signalübertragung mit einem automatisiert betreibbaren Kraftfahrzeug ausgebildet. Der Signalübertragungsvorrichtung ist mindestens ein Basis-Fahrmanöverbefehl zugeordnet. Die Signalübertragungsvorrichtung ist ausgebildet, ein für den mindestens einen zugeordneten Basis-Fahrmanöverbefehl charakteristisches Signal zu übertragen. Die Signalübertragungsvorrichtung kann als Radar-Responder, z. B als Radarreflektor oder Racon, ausgeführt sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1: ein schematisches Ablaufdiagramm des erfindungsgemäßen Verfahrens gemäß einer Ausführungsform der Erfindung;
- Figur 2A: eine schematische Darstellung eines mittels des Verfahrens einer ersten Ausführungsform umgesetzten automatisierten Betriebs des Kraftfahrzeugs;
- Figur 2B: Auswahl und Reihenfolge von Basis-Manöverbefehlen zur Umsetzung des in Figur 2A gezeigten automatisierten Betriebs des Kraftfahrzeugs;
- Figur 3: eine schematische Seitenansicht mobiler Signalübertragungsvorrichtungen gemäß dreier weiterer Ausführungsformen der Erfindung;
- Figur 4: eine schematische Seitenansicht eines Überwachungsverbunds gemäß einer weiteren Ausführungsform der Erfindung; und
- Figur 5: ein Blockdiagram zur Illustration der Umwandlung von Radarsignalen in automatisierte Fahrmanöver gemäß einer Ausführungsform.

Gleiche oder funktional äquivalente Elemente sind in allen Figuren mit denselben Bezugszeichen bezeichnet und sind zum Teil nicht gesondert beschrieben.

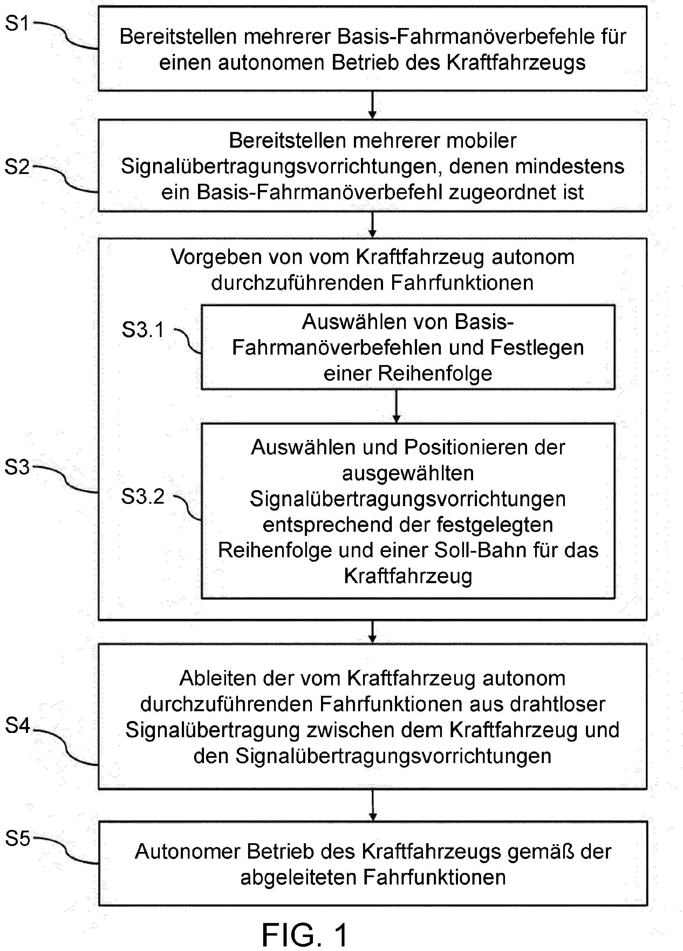

Figur 1 zeigt ein schematisches Ablaufdiagramm des erfindungsgemäßen Verfahrens zum automatisierten Betrieb des Kraftfahrzeugs 1.

In Schritt S1 des vorgeschlagenen Verfahrens werden mehrere Basis-Fahrmanöverbefehle für einen automatisierten Betrieb eines Kraftfahrzeugs bereitgestellt. Diese Basis-Fahrmanöverbefehle können vom Kraftfahrzeug automatisiert, d. h. ohne Fahrer bzw. ohne Fahrereingriff, umgesetzt werden. Die Basis-Fahrmanöverbefehle sind zweckmäßig so gewählt, dass damit die für den gewünschten Einsatzzweck denkbaren unterschiedlichen Abfolgen von Fahrmanövern oder die möglichen Routen und Verhaltensweisen des Kraftfahrzeugs vorgegeben werden können. In der Praxis können einem Benutzer, z. B. einem Arbeiter, der den automatisierten Betrieb auf einer Baustelle einrichten soll, diese zur Verfügung stehenden Basis-Fahrmanöverbefehle beispielsweise im Rahmen einer Schulung und/oder im Rahmen eines Bedienhandbuchs zum Einrichten des automatisierten Betriebs, mitgeteilt werden.

**Tabelle 1: Ableiten automatisiert durchzuführender Fahrfunktionen 20 anhand einer Kennung 21 zugeordneter Basis-Fahrmanöverbefehle 22**

| Kennung-zu-Manöver-Zuordnung | | |
|---|---|---|
| Nr. | Kennung | Basis-Fahrmanöverbefehl |
| 1. | ID-1 | Fahre auf Station tangential (zu Nachbarstationen) zu, 15 km/h |
| 2. | ID-2 | Fahre auf Station tangential (zu Nachbarstationen) zu, bei Erreichen Rechtskurve R=15m |
| 3. | ID-3 | Fahre auf Station tangential (zu Nachbarstationen) zu, bei Erreichen v= 0km/h + Lade ab |
| 4. | ID-4 | Fahre auf Station tangential (zu Nachbarstationen) zu, bei Erreichen Rechtskurve R=25m |
| ... | ... | ... |
| Keine ID: setze letztes ID-Manöver für 5s fort | | |

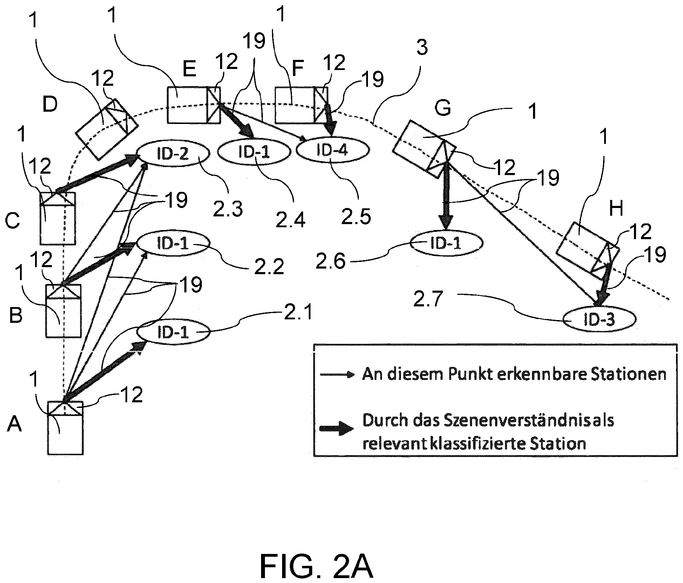

In Tabelle 1 sind in der rechten Spalte beispielhaft einige der bereitgestellten Basis-Fahrmanöverbefehle 22 exemplarisch dargestellt. Der erste Basis-Fahrmanöverbefehl 22 enthält dabei die Anweisung "Fahre auf Station tangential (zu Nachbarstation) zu, 15 km/h". Dies bedeutet sinngemäß, dass das Kraftfahrzeug in einem automatisierten Betrieb auf eine Signalübertragungsvorrichtung, nachfolgend auch als Station oder Radarresponder bezeichnet, die diesen Basis-Fahrmanöverbefehl übersendet, tangential in Richtung auf eine nachfolgende Station zufahren soll, mit einer Sollgeschwindigkeit von 15 km/h. Dies wird nachfolgend in Zusammenhang mit Figur 2A noch näher erläutert.

Tabelle 1 enthält beispielhaft drei weitere Basis-Fahrmanöverbefehle. Es wird betont, dass diese Auswahl nur beispielhaft und nicht vollständig ist. Zur Vereinfachung der Beschreibung wurden nur diejenigen Basis-Fahrmanöverbefehle in Tabelle 1 aufgeführt, die auch zur Vorgabe des beispielhaften automatisierten Betriebs, wie in Figur 2A illustriert, vonnöten sind.

Unter dem Begriff des Basis-Fahrmanöverbefehls 22 können dabei z. B. bestimmte, mit dem Kraftfahrzeug selbst oder mit Anbauten oder mit Nebenaggregaten des Kraftfahrzeugs durchführbare Standard-Manöver, vorzugsweise Anweisungen zu Fahrmanövern, zur lokalen Navigation und Verkehrszeicheninformationen verstanden werden. Ferner kann ein Basis-Fahrmanöverbefehl 22 ein Fahrmanöver umfassen, das bewirkt, dass das Kraftfahrzeug sich der Signalübertragungsvorrichtung, die das Basis-Fahrmanöverbefehl aussendet, in einer bestimmten Weise nähert, beispielsweise tangential auf diese mit einer bestimmten Geschwindigkeit zufährt, wie vorstehend bereits erläutert wurde.

In Schritt S2 werden mehrere mobile Signalübertragungsvorrichtungen, die zur drahtlosen Signalübertragung mit dem automatisiert betreibbaren Kraftfahrzeug ausgebildet sind, bereitgestellt. Jeder Signalübertragungsvorrichtung ist mindestens ein Basis-Fahrmanöverbefehl 22 zugeordnet. Das Kraftfahrzeug ist ausgebildet, aus der Signalübertragung mit einer der Signalübertragungsvorrichtungen den mindestens einen zugeordneten Basis-Fahrmanöverbefehl 22 zu bestimmen. Das zwischen der Signalübertragungsvorrichtung und dem Kraftfahrzeug übertragene Signal kann dabei beispielhaft bereits den Basis-Fahrmanöverbefehl 22 selbst und/oder eine Kennung enthalten. Die Kennung dient zur Identifizierung des Basis-Fahrmanöverbefehls, der der Signalübertragungsvorrichtung zugeordnet ist. Im letztgenannten Fall ist das Kraftfahrzeug 1 ausgebildet, den einer Signalübertragungsvorrichtung mindestens einen zugeordneten Basis-Fahrmanöverbefehl 22 dadurch zu bestimmen, dass aus der Signalübertragung mit der entsprechenden Signalübertragungsvorrichtung die Kennung 21 ermittelt wird. Dies wird nachfolgend noch detaillierter beschrieben.

Tabelle 1 zeigt, dass jedem Basis-Fahrmanöverbefehl 22 eine eindeutige Kennung 22, z. B. ID-1, ID-2, ID-3 oder ID-4 etc. zugeordnet ist. Die Zuordnung 20 ist im Kraftfahrzeug hinterlegt. Dadurch können Basis-Fahrmanöverbefehle 22 jeweils durch eine kurze eindeutige Kennung 21 identifiziert oder, anders ausgedrückt, codiert werden. Wenn einer Signalübertragungsvorrichtung somit die Kennung ID-1 zugewiesen wurde, heißt das, dass diese Signalübertragungsvorrichtung dazu ausgebildet ist, das der Kennung ID-1 zugeordnete Basis-Fahrmanöver 22 "Fahre auf Station tangential (zu Nachbarstation) zu, 15 km/h" dem Kraftfahrzeug über eine Signalübertragung zukommen zu lassen. Es können natürlich mehrere Signalübertragungsvorrichtungen mit der gleichen Kennung und/oder mit dem gleichen zugeordneten Basis-Fahrmanöverbefehl bereitgestellt werden, so dass zur Vorgabe des automatisierten Betriebs entsprechend Basis-Fahrmanöverbefehle mehrfach verwendet werden können.

In Schritt S3 werden vom Kraftfahrzeug 1 automatisiert durchzuführende Fahrfunktionen vorgegeben, was nachfolgend unter Bezugnahme auf die Tabelle 1 sowie Figuren 2A bis 2B erläutert wird.

Zur Verdeutlichung des vorgeschlagenen Verfahrens soll der in Figur 2A schematisch gezeigte automatisierte Betrieb des Kraftfahrzeugs 1 auf einer Baustelle beispielhaft umgesetzt werden. Im Beispiel ist eine Sollbahn 3, dargestellt durch die gepunktete Linie, vorgegeben. Das Kraftfahrzeug 1 soll, ausgehend vom Ausgangspunkt A bis hin zur Zielposition H, automatisiert entlang dieser Sollbahn 3, d. h. selbststätig ohne Fahrereingriff, fahren. An Position H soll das Kraftfahrzeug 1 angehalten und die Ladung des Kraftfahrzeugs 1 abgeladen werden. Die Positionsnummern A bis H sollen im gezeigten Beispiel zur Vereinfachung der Beschreibung verschiedene Zeitpunkte der automatisierten Durchfahrt des Kraftfahrzeugs 1 entlang der Sollbahn 3 kennzeichnen. Es ist jedoch auch denkbar, dass mehrere Kraftfahrzeuge in einem Kolonnenbetrieb entlang der Sollbahn 3 geführt werden.

Damit das Kraftfahrzeug 1 automatisiert fahren kann, müssen dem Kraftfahrzeug extern die durchzuführenden Fahrmanöver vorgegeben werden.

Ein Nutzer, beispielsweise ein Arbeiter auf der Baustelle, wählt zur Umsetzung dieser automatisiert durchzuführenden Fahrmanöver zunächst diejenigen Basis-Fahrmanöverbefehle 22 aus, die zur Realisierung der Sollbahn 3 und der weiteren Fahrmanöver, z. B. Abladevorgänge etc., benötigt werden, und legt deren Reihenfolge fest. In anderen Worten wird das Führen des Kraftfahrzeugs 1 auf der Sollbahn 3, das Anhalten und das Abladen dabei gedanklich in mehrere grundlegende Basis-Fahrmanöverbefehle 22 unterteilt.

Wie in Figur 2A dargestellt ist, kann die Sollbahn 3 dadurch realisiert werden, dass das Kraftfahrzeug 1 ausgehend vom Punkt A erst zweimal das Basis-Fahrmanöver mit der Kennung ID-1 durchführt, dann das Basis-Fahrmanöver mit der Kennung ID-2, dann wieder das Fahrmanöver mit der Kennung ID-1, dann das Basis-Fahrmanöver mit der Kennung ID-4, dann wieder das Basis-Fahrmanöver mit der Kennung ID-1 und abschließend das Basis-Fahrmanöver mit der Kennung ID-3.

Um die Sollbahn 3 durch diese Reihenfolge von Basis-Fahrmanövern 22 vorzugeben, stehen im gezeigten Beispiel dem Arbeiter eine Reihe von mobilen Signalübertragungsvorrichtungen 2 zur Verfügung, denen jeweils eines dieser Basis-Fahrmanöver in Form der Kennung 21 zugeordnet ist.

Vorliegend sind die mobilen Signalübertragungsvorrichtungen 2, lediglich beispielhaft, als Radar-Responder ausgebildet, die entsprechend ihrer zugeordneten Kennung 22 ein für diese Kennung 22 charakteristisches Antwortsignal erzeugen, wenn sie von einem Radarstrahl des Kraftfahrzeugs 1 angestrahlt werden. Die Signalübertragungsvorrichtungen 2 können in weiteren, hier nicht dargestellten Ausführungsformen der Erfindung, beispielsweise auch als Ll-DAR-Responder ausgebildet sein.

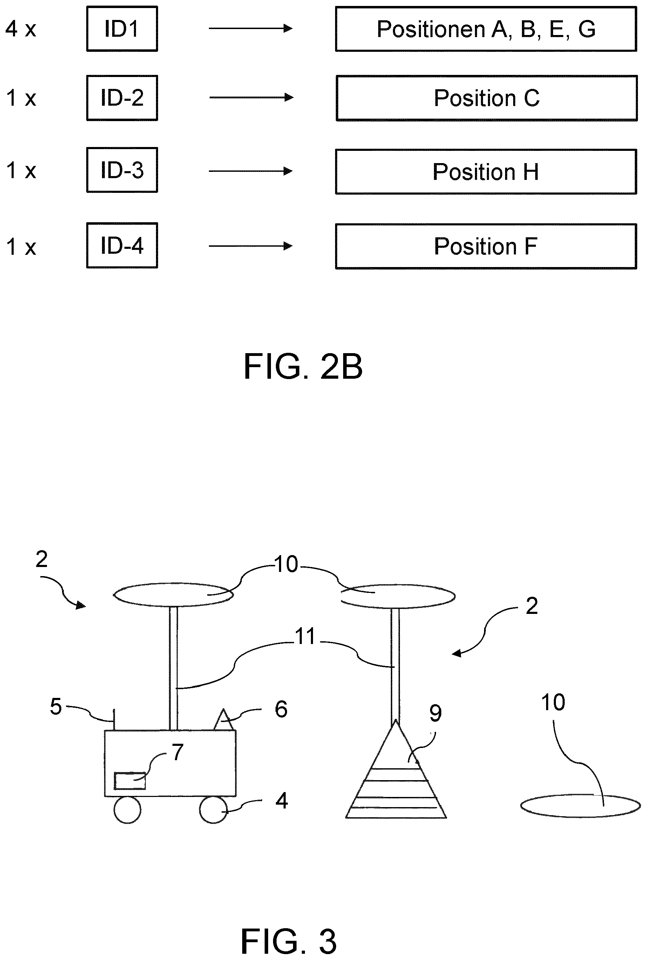

Um das Kraftfahrzeug entlang der Sollbahn 3 zu führen und das gewünschte Abladen an der Position H zu realisieren, werden somit vier Radar-Responder 2.1, 2.2, 2.4, 2.6 benötigt, denen jeweils die Kennung ID-1 zugeordnet ist. Ferner wird ein Radar-Responder 2.3 benötigt, dem die Kennung ID-2 zugeordnet ist. Ferner wird ein Radar-Responder 2.4 benötigt, dem die Kennung ID-4 zugeordnet ist. Ferner wird ein Radar-Responder 2.7 benötigt, dem die Kennung ID-3 zugeordnet ist. Dies ist in Figur 2B schematisch illustriert.

Diese sieben Radar-Responder 2.1 bis 2.7 werden somit von einem Arbeiter, z. B. aus einem Lagerbereich für Radar-Responder 2 der Baustelle, ausgewählt und an die gewünschte Position gebracht. D. h., die Radar-Responder werden entlang der und benachbart zur Sollbahn 3 positioniert, wie es in Figur 2A beispielhaft dargestellt ist.

Entsprechend wählt der Arbeiter die benötigten Signalübertragungsvorrichtungen 2, 2.1 - 2.7 aus und positioniert diese entlang der Sollbahn 3 (siehe Figur 2A).

Nachdem die Radar-Responder 3 in der richtigen Reihenfolge entlang und beabstandet zur Sollbahn 3 aufgestellt wurden, kann der automatisierte Betrieb des Kraftfahrzeugs 1 beginnen, wobei wiederholt die Schritte S4 und S5 durchgeführt werden. D. h., es wird jeweils eine vom Kraftfahrzeug automatisiert durchzuführende Fahrfunktionen aus der drahtlosen Signalübertragung zwischen dem Kraftfahrzeug 1 und den ausgewählten und positionierten Signalübertragungsvorrichtungen abgeleitet (Schritt S4) und anschließend der automatisierte Betrieb des Kraftfahrzeugs gemäß der abgeleiteten Fahrfunktion entsprechend ausgeführt (Schritt S5).

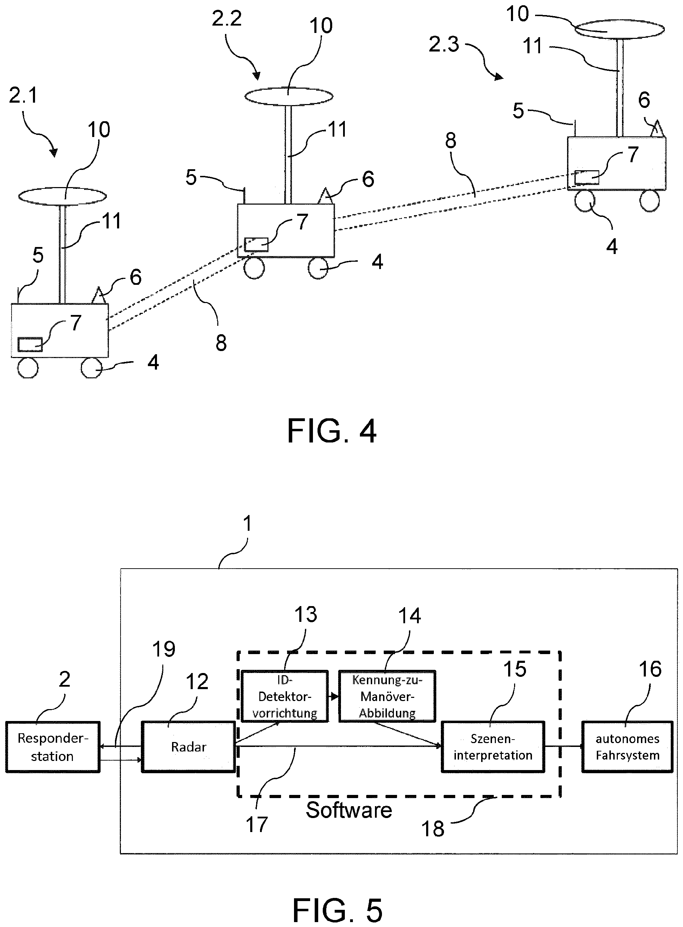

Dies wird nachfolgend anhand der Tabelle 1 sowie Figuren 2A bis 2B und der Figur 5 erläutert. Das Kraftfahrzeug 1 ist lediglich beispielhaft in diesem Ausführungsbeispiel ein Lastkraftwagen mit einer kippbaren Ladefläche. Das Kraftfahrzeug 1 weist ferner, hier lediglich exemplarisch, eine Radarvorrichtung 12 auf, mittels derer Radar-Signale 19 ausgesendet und empfangen werden können. Die ausgesendeten Radar-Signale 19 werden, sofern sich das Kraftfahrzeug im Nahbereich zu den Radar-Respondern 2 befindet, von diesen reflektiert, wobei ein für die jeweilige Kennung charakteristisches Echo erzeugt wird. Die Radarvorrichtung 12 des Kraftfahrzeugs 1 empfängt dieses charakteristisches Echo. Das charakteristische Echo der als Radar-Responder ausgebildeten Signalübertragungsvorrichtung 2.1 bis 2.7 enthält im gezeigten Ausführungsbeispiel eine Kennung 21, anhand derer der Basis-Fahrmanöverbefehl 22 ermittelt werden kann, welcher der Kennung 21 und damit dem Radar-Responder zugeordnet ist.

Das Kraftfahrzeug 1 weist ferner ein Automationssystem für den automatisierten Fahrbetrieb auf, das dazu ausgebildet ist, anhand der von den Radar-Respondern 2 empfangenen Radarsignalen Fahrmanövern für den automatisierten Betrieb abzuleiten.

Dies ist in dem Blockdiagramm der Figur 5 schematisch dargestellt, auf das nachfolgend in Zusammenhang mit der Beschreibung der Figur 2A ebenfalls Bezug genommen wird.

Das Automationssystem 18, 16 für den automatisierten Fahrbetrieb umfasst eine Auswerte-Software 18 zur Ableitung von durchzuführenden Fahrmanövern und ein automatisiertes Fahrsystem 16, dass diese Fahrmanöver in einen automatisierten Fahrbetrieb, d. h. Längs- und Querführungsbefehle, Steuerung von Nebenaggregaten des Kraftfahrzeugs etc., umsetzt.

Ein sich in Position A der Figur 2A befindliches Kraftfahrzeug 1 sendet mittels seiner Radar-Vorrichtung 12 Radar-Signale 19 aus. Diese werden durch drei Radar-Responder 2.1, 2.2 und 2.3 empfangen und jeweils als charakteristisches Echo an die Radar-Vorrichtung 12 des Kraftfahrzeugs 1 zurückgeworfen.

Den Radar-Respondern 2.1 und 2.2 ist die Kennung 21 "ID-1" und der Signalübertragungsvorrichtung 2.3 die Kennung 21 "ID-3" zugeordnet.

Die Auswerte-Software 18 umfasst ein erstes Auswertemodul 13, das ausgebildet ist, Radar-Responder in den empfangenen Radardaten zu identifizieren. Hierzu ermittelt das Auswertemodul 13 die Kennung 21 anhand des charakteristischen Radarsignals. Hierzu ist im Auswertemodul 13 eine Zuordnungsvorschrift hinterlegt (nicht dargestellt), die einer bestimmten Antwortcharakteristik eine bestimmte Kennung zuordnet. Die Auswerte-Software 18 umfasst ferner ein Kennung-zu-Manöver-Zuordnungsmodul 14, das mittels einer hinterlegten Zuordnungstabelle 20, wie in Tabelle 1 gezeigt, aus der ermittelten Kennung den der Kennung zugeordneten Basis-Fahrmanöverbefehl 22 ableitet.

Die so ermittelten Basis-Manöverbefehle werden schließlich im Gesamtkontext interpretiert und priorisiert, so dass letztlich ein Manöverbefehl an das automatisierte Fahrsystem 16 des Kraftfahrzeugs weitergegeben werden kann. Hierzu umfasst die Auswerte-Software 18 ein weiteres Auswertemodul 15. Falls der Radar 12 des Kraftfahrzeugs z. B. Radarantwortsignale mehrerer Responderstationen 2 empfängt, dann wählt diese Auswertemodul 15 anhand vorbestimmter Kriterien zweckmäßig aus, welche Responderstation 2 die aktuell relevante ist. Die Bestimmung der aktuell relevanten Signalübertragungsvorrichtung 2 soll hier lediglich beispielshaft anhand der Ortung der empfangenen Radar-Signale 19 erfolgen. Hierzu analysiert das Auswertemodul 15 auch direkt die Ortung der empfangenen Radarsignale, was mit dem Pfeil 17 illustriert ist. Diese Funktion kann alternativ auch bereits im Auswertemodul 13 durchgeführt werden.

Die Radarvorrichtung 12 des Kraftfahrzeugs 1 wird zusätzlich dazu genutzt, den Umfeldnahbereich des Kraftfahrzeugs 1 abzutasten, insbesondere dazu, Hindernisse im Umfeldnahbereich des Kraftfahrzeugs 1 zu erkennen. Die erfassten Umfeldnahbereich-Daten 17 fließen in die Szeneninterpretation 15 ein. In der Szeneninterpretation 15 wird entschieden, ob ein durch die Kennung-zu-Manöver-Abbildung 14 vorgeschlagener Basis-Fahrmanöverbefehl 22 zu einer Kollision mit dem durch die Radarvorrichtung 12 erfassten Hindernis der Umfeldnahbereich-Daten 17 führen würde. In diesem Falle würde das Hindernis der Ausführung der vom Kraftfahrzeug 1 automatisiert durchzuführenden Fahrfunktionen insofern entgegenstehen. Es ist denkbar, dass die automatisiert durchzuführende Fahrfunktion dann nicht oder nur in veränderter Form durchgeführt wird, um die Kollision mit dem Hindernis entsprechend zu verhindern. Das Ergebnis der Szeneninterpretation 14 wird insofern dazu genutzt, den automatisierten Betrieb des Kraftfahrzeugs 1 mithilfe des automatisierten Fahrsystems 16 umzusetzen.

Ausdrücklich wird die Möglichkeit betont, dass auch weitere dem Szenenverständnis dienende Informationen, z. B. Informationen aus einem Kamerabild, Lasersensoren, Abstandssensoren oder die in Bezug auf Figur 5 beschriebene Radar-Hinderniserkennung. mittels Umfeldnahbereich-Daten berücksichtigt werden können.

In der Folge führt das Kraftfahrzeug den der Kennung ID-1 zugeordneten Fahrmanöverbefehl aus und fährt tangential auf die dem Basis-Fahrmanöverbefehl 22 zugeordnete Signalübertragungsvorrichtung 2.1 zu.

In Position B empfängt das Kraftfahrzeug 1 die Signale der Signalübertragungsvorrichtungen 2.2 und 2.3, wobei es letztere als aktuell relevant identifiziert und entsprechend in Position C vorrückt.

In Position C empfängt das Kraftfahrzeug 1 lediglich ein Signal der Signalübertragungsvorrichtung 2.3. Das Kraftfahrzeug führt in der Folge den der Kennung 21 "ID-2" zugeordneten Basis-Fahrmanöverbefehl 22 aus, fährt tangential auf die Signalübertragungsvorrichtung 2.3 zu und schlägt bei Erreichen eine Rechtskurve mit einem Radius von 15 m ein.

In Position D empfängt das Kraftfahrzeug 1 keine Radar-Signale. In der in Tabelle 1 gezeigten ID-zu-Manöver-Abbildung ist im Kraftfahrzeug 1 hinterlegt, dass für diesen Fall der letzte Basis-Fahrmanöverbefehl auszuführen ist (hier der der Kennung 21 "ID-2" zugeordnete Basis-Fahrmanöverbefehl). Entsprechend behält das Kraftfahrzeug Fahrzeuggeschwindigkeit und Kurvenradius bei und rückt in Position E vor.

In Position E empfängt das Kraftfahrzeug 1 Signale der Signalübertragungsvorrichtungen 2.4 und 2.5, wobei es anhand des bereits beschriebenen Musters erstere als relevant identifiziert und entsprechend dem der Kennung 21 "ID-1" zugeordneten Basis-Fahrmanöverbefehl 22 entsprechend in Position F vorrückt.

In Position F empfängt das Kraftfahrzeug lediglich ein Signal der Signalübertragungsvorrichtung 2.5. Das Kraftfahrzeug führt in der Folge den der Kennung 21 "ID-4" zugeordneten Basis-Fahrmanöverbefehl 22 aus, fährt tangential auf die Signalübertragungsvorrichtung 2.5 zu und schlägt bei Erreichen eine Rechtskurve mit einem Radius von 25 m ein.

In Position G empfängt das Kraftfahrzeug 1 Signale der Signalübertragungsvorrichtungen 2.6 und 2.7, identifiziert das Signal der Signalübertragungsvorrichtung 2.6 als aktuelle relevant und führt insofern den der Kennung 21 "ID-1" zugeordneten Basis-Fahrmanöverbefehl 22 aus und rückt in Position H vor.

In Position H empfängt das Kraftfahrzeug 1 lediglich ein Signal der Signalübertragungsvorrichtung 2.7. Das Kraftfahrzeug 1 führt in der Folge den der Kennung 21 "ID-3" zugeordneten Basis-Fahrmanöverbefehl 22 aus, verringert die Fahrzeuggeschwindigkeit bei Erreichen auf 0 km/h und lädt die Fahrzeugladung ab.

Figur 3 zeigt drei verschiedene Ausführungsformen der vorgeschlagenen Signalübertagungsvorrichtung 2. In der ersten gezeigten Ausführungsform der Figur 3 (links) umfasst die Signalübertragungsvorrichtung 2 einen Radar-Responder 10, der zur Identifizierung der Signalübertragungsvorrichtung 2 und zur Identifizierung des mindestens einen zugeordneten Fahrmanöverbefehls beispielsweise ein charakteristisches Antwortsignal oder ein charakteristisches Echo erzeugt. Ferner umfasst die Signalübertragungsvorrichtung 2 dieser Ausführungsform Räder 4 zum Verfahren, eine Kommunikationseinrichtung 5, die zur Kommunikation mit den anderen Kommunikationseinrichtungen 5 ausgebildet ist, und eine optische und/oder akustische Warneinrichtung 6. Zudem weist die Signalübertragungsvorrichtung 2 einen Lichtschrankenreflektor 7 zur Ausbildung einer Lichtschranke 8 auf, wobei mittels der Lichtschranken 8 und der Lichtschrankenreflektoren 7 ein in Figur 4 dargestellter Überwachungsverbund der positionierten Signalübertragungsvorrichtungen 2 realisiert wird. In der gezeigten Ausführungsform wird bei einem Durchschreiten des durch die Lichtschranken 8 und Lichtschrankenreflektoren 7 realisierten Überwachungsverbunds mittels der Warneinrichtung 6 ein optisches oder akustisches Warnsignal ausgegeben.

In der zweiten gezeigten Ausführungsform der Figur 3 (Mitte) umfasst die Signalübertragungsvorrichtung 2 einen Radar-Responder 10, einen höhenverstellbaren Signalmast 11 und eine Pylone 9. Die Signalübertragungsvorrichtung 2 erfüllt in dieser Ausführungsform eine Doppelfunktion, nämlich die Funktion der Signalübertragung 2 im vorgeschlagenen Verfahren und eine für Menschen vertraute Form zur Abgrenzung des Fahrbahnbereichs.

In der dritten gezeigten Ausführungsform der Figur 3 (rechts) umfasst die Signalvorrichtung 2 lediglich den Radar-Responder 10.

### Bezugszeichenliste

- 1: Kraftfahrzeug
- 2, 2.1 - 2.7: Signalübertragungsvorrichtung
- 3: Soll-Bahn
- 4: Räder
- 5: Kommunikationseinrichtung
- 6: Warneinrichtung
- 7: Lichtschrankenreflektor
- 8: Lichtschranke
- 9: Pylone
- 10: Radar-Responder
- 11: Höhenverstellbarer Signalmast
- 12: Radarvorrichtung
- 13: Detektorvorrichtung
- 14: Kennung-zu-Manöver-Abbildung
- 15: Szeneninterpretation
- 16: Automatisiertes Fahrsystem
- 17: Radar-Daten
- 18: Programmtechnische Umsetzung
- 19: Radarsignale
- 20: Ableiten automatisiert durchzuführender Fahrfunktionen
- 21: Kennung
- 22: Basis-Fahrmanöverbefehl

## Patentansprüche

1. Verfahren zum automatisierten Betrieb eines Kraftfahrzeugs (1), wobei das Kraftfahrzeug (1) ausgebildet ist, eine vorgegebene Abfolge von Fahrmanövern automatisiert durchzuführen, vorzugsweise in einem vom allgemeinen Straßenverkehr abgetrennten Bereich, **gekennzeichnet durch:**
a) Bereitstellen mehrerer Basis-Fahrmanöverbefehle (22) für einen automatisierten Betrieb des Kraftfahrzeugs (1);
b) Bereitstellen mehrerer mobiler Signalübertragungsvorrichtungen (2, 2.1 - 2.7), die zur drahtlosen Signalübertragung mit dem Kraftfahrzeug (1) ausgebildet sind, wobei jeder Signalübertragungsvorrichtung (2, 2.1 - 2.7) mindestens ein Basis-Fahrmanöverbefehl (22) zugeordnet ist und das Kraftfahrzeug (1) ausgebildet ist, aus der Signalübertragung mit einer der Signalübertragungsvorrichtungen (2, 2.1 - 2.7) den mindestens einen zugeordneten Basis-Fahrmanöverbefehl (22) zu bestimmen;
c) Vorgeben von vom Kraftfahrzeug (1) automatisiert durchzuführenden Fahrfunktionen **durch**:
c1) Auswählen von Basis-Fahrmanöverbefehlen (22) aus den mehreren bereitgestellten Basis-Fahrmanöverbefehlen (22) und Festlegen von deren Reihenfolge; und
c2) Auswählen von Signalübertragungsvorrichtungen (2, 2.1 - 2.7) aus den bereitgestellten Signalübertragungsvorrichtungen (2, 2.1 - 2.7) korrespondierend zu den ausgewählten Basis-Fahrmanöverbefehlen (22) und Positionieren der ausgewählten Signalübertragungsvorrichtungen (2, 2.1 - 2.7) entsprechend der festgelegten Reihenfolge von Basis-Fahrmanöverbefehlen (22) und einem Soll-Fahrkorridor (3) für den automatisierten Betrieb des Kraftfahrzeugs (1);
d) Ableiten der vom Kraftfahrzeug (1) automatisiert durchzuführenden Fahrfunktionen aus der drahtlosen Signalübertragung zwischen dem Kraftfahrzeug (1) und den ausgewählten und positionierten Signalübertragungsvorrichtungen (2, 2.1 - 2.7); und
e) automatisierten Betrieb des Kraftfahrzeugs (1) gemäß der abgeleiteten Fahrfunktionen, wobei sich die Reihenfolge der abgeleiteten Fahrfunktionen aus der Positionierung der ausgewählten Signalübertragungsvorrichtungen (2, 2.1 - 2.7) ergibt.

2. Verfahren nach Anspruch 1, **dadurch gekennzeichnet,**
**dass** das von der Signalübertragungsvorrichtung (2, 2.1 - 2.7) übertragene Signal eine Kennung zur Identifizierung der Signalübertragungsvorrichtung (2, 2.1 - 2.7) enthält; und dass das Kraftfahrzeug (1) ausgebildet ist, den einer Signalübertragungsvorrichtung (2, 2.1 - 2.7) mindestens einen zugeordneten Fahrmanöverbefehl (22) dadurch zu bestimmen, dass aus der Signalübertragung mit der entsprechenden Signalübertragungsvorrichtung (2, 2.1 - 2.7) die Kennung zur Identifizierung der Signalübertragungsvorrichtung (2, 2.1 - 2.7) ermittelt wird und dass aus der ermittelten Kennung anhand einer hinterlegten Zuordnung der dieser Kennung zugeordnete mindestens eine Basis-Fahrmanöverbefehl (22) bestimmt wird.

3. Verfahren nach Anspruch 2, **dadurch gekennzeichnet, dass** die Kennung zur Identifizierung der Signalübertragungsvorrichtung (2, 2.1 - 2.7) veränderbar ist, beispielsweise durch Veränderung des von der Signalübertragungsvorrichtung (2, 2.1 - 2.7) übertragenen Signals.

4. Verfahren nach einem der vorherigen Ansprüche, **dadurch gekennzeichnet, dass** das Ableiten der vom Kraftfahrzeug (1) automatisiert durchzuführenden Fahrfunktionen ferner umfasst:
a) Falls das Kraftfahrzeug (1) Signale von mehreren Signalübertragungsvorrichtungen (2, 2.1 - 2.7) empfängt: Auswerten der empfangenen Signale und Bestimmen einer Signalübertragungsvorrichtung (2, 2.1 - 2.7) als die aktuell relevante Signalübertragungsvorrichtung (2, 2.1 - 2.7), und
b) Ableiten der vom Kraftfahrzeug (1) automatisiert durchzuführenden Fahrfunktionen aus der drahtlosen Signalübertagung zwischen dem Kraftfahrzeug (1) und der als aktuell relevant bestimmten Signalübertragungsvorrichtung (2, 2.1 - 2.7).

5. Verfahren nach einem der vorherigen Ansprüche, **dadurch gekennzeichnet, dass** das Ableiten der vom Kraftfahrzeug (1) automatisiert durchzuführenden Fahrfunktionen ferner umfasst:
a) eine Umfelderfassung mittels mindestens eines Umfeldsensors des Kraftfahrzeugs (1), und
b) Überprüfung, ob anhand der Umfelderfassung ein Hindernis ermittelt wurde, das der Ausführung der vom Kraftfahrzeug (1) automatisiert durchzuführenden Fahrfunktionen entgegensteht.

6. Verfahren nach einem der vorherigen Ansprüche, **dadurch gekennzeichnet, dass** die Basis-Fahrmanöverbefehle (22) umfassen:
a) ein Fahrmanöver, das bewirkt, dass das Kraftfahrzeug (1) sich auf die dem Basis-Fahrmanöverbefehl (22) zugeordnete Signalübertragungsvorrichtung (2, 2.1 - 2.7) in einer bestimmten Weise nähert, beispielsweise tangential auf diese mit einer bestimmten Geschwindigkeit zufährt, und/oder
b) ein Fahrmanöver, das eine Änderung des Gierwinkels und/oder eine Änderung der Fahrzeuggeschwindigkeit und/oder ein Anhalten und/oder ein Losfahren des Kraftfahrzeugs (1) bewirkt und/oder
c) eine Aktionsanweisung, die eine Steuerung von Komponenten des Kraftfahrzeugs bewirkt und/oder die ein Verhalten des Kraftfahrzeugs, vorzugsweise dessen automatisierten Betrieb, beeinflusst.

7. Verfahren nach einem der vorherigen Ansprüche, **dadurch gekennzeichnet, dass** die mehreren Basis-Fahrmanöverbefehle (22) in unterschiedliche Klassen eingeteilt sind, die umfassen: Verkehrszeicheninformationen und/oder Wegpunktinformationen, die im Zusammenspiel mehrerer Signalübertragungsvorrichtungen (2, 2.1 - 2.7) einen Pfad definieren, und/oder Lokalisierungsinformationen und/oder Aktionsbefehle, die einen durch das Kraftfahrzeug (1) ausgeführten Arbeitsvorgang auslösen, beispielsweise das Ankippen der Ladefläche eines als Kipplader ausgebildeten Nutzfahrzeugs.

8. Verfahren nach einem der vorherigen Ansprüche, **dadurch gekennzeichnet, dass** die Signalübertragungsvorrichtung (2, 2.1 - 2.7) zur drahtlosen Nahbereichssignalübertragung ausgebildet ist, vorzugsweise als elektromagnetische Strahlung übertragender Responder ausgeführt ist.

9. Verfahren nach einem der vorhergehenden Ansprüche, **dadurch gekennzeichnet, dass** die Signalübertragungsvorrichtung (2, 2.1 - 2.7) als Radar-Responder (10), beispielsweise als Racon oder als reflektierender Radar-Responder (10), ausgebildet ist, der zur Identifizierung der Signalübertragungsvorrichtung (2, 2.1 - 2.7) und/oder zur Identifizierung des mindestens einen zugeordneten Basis-Fahrmanöverbefehls (22) ein charakteristisches Antwortsignal oder ein charakteristisches Echo erzeugt.

10. Verfahren nach einem der vorherigen Ansprüche, **dadurch gekennzeichnet, dass** die Signalübertragungsvorrichtung (2, 2.1 - 2.7) einen Leitkegel, einen höhenverstellbaren Signalmast (11) und/oder eine akustisch und/oder optisch arbeitende Warneinrichtung (6) aufweist.

11. Verfahren nach einem der vorherigen Ansprüche, **dadurch gekennzeichnet, dass** die Signalübertragungsvorrichtung (2, 2.1 - 2.7) Räder (4) oder Ketten zum Verfahren und/oder einen Verfahr-Antrieb aufweist.

12. Verfahren nach einem der vorherigen Ansprüche, **dadurch gekennzeichnet, dass** die Signalübertragungsvorrichtung (2, 2.1 - 2.7) eine Kommunikationseinrichtung (5) aufweist, die zur Kommunikation mit den anderen Kommunikationseinrichtungen (5) oder einer externen Einheit ausgebildet ist.

13. Verfahren nach den Ansprüchen 11 und 12, **dadurch gekennzeichnet, dass** der Verfahr-Antrieb ausgebildet ist, mittels über die Kommunikationseinrichtung (5) erhaltener Steuerbefehle ferngesteuert zu werden.

14. Verfahren nach einem der vorherigen Ansprüche, **dadurch gekennzeichnet, dass** die mehreren Signalübertragungsvorrichtungen (2, 2.1 - 2.7) jeweils eine Lichtschranke (8) und/oder ein Lichtschrankenreflektor (7) aufweisen, wobei mittels der Lichtschranken (8) und/oder der Lichtschrankenreflektoren (7) ein Überwachungsverbund der positionierten Signalübertragungsvorrichtungen (2, 2.1 - 2.7) realisiert wird.

15. Verfahren nach Anspruch 14, **dadurch gekennzeichnet, dass** bei einem Durchschreiten des durch die Lichtschranken (8) und/oder Lichtschrankenreflektoren (7) realisierten Überwachungsverbunds
a) ein optisches oder akustisches Warnsignal durch die Signalübertragungsvorrichtung (2, 2.1 - 2.7) ausgegeben wird und/oder
b) ein Warnsignal an das Kraftfahrzeug übermittelt wird.

16. Verfahren nach einem der vorherigen Ansprüche, **dadurch gekennzeichnet, dass** den ausgewählten Signalübertragungsvorrichtungen (2, 2.1 - 2.7) eine jeweils absolute Position zugewiesen ist und/oder dass die Signalübertragungsvorrichtung (2, 2.1 - 2.7) ausgebildet ist, ihre absolute Ortsposition zu erfassen.

17. Mobile Signalübertragungsvorrichtung (2, 2.1 - 2.7) zur Durchführung eines Verfahrens nach Anspruch 1, die zur drahtlosen Signalübertragung vorzugsweise mit einem automatisiert betreibbaren Kraftfahrzeug (1) ausgebildet ist, wobei der Signalübertragungsvorrichtung (2, 2.1 - 2.7) mindestens ein Basis-Fahrmanöverbefehl (22) zugeordnet ist und die Signalübertragungsvorrichtung (2, 2.1 - 2.7) ausgebildet ist, ein für den mindestens einen zugeordneten Basis-Fahrmanöverbefehl (22) charakteristisches Signal zu übertragen.

18. Mobile Signalübertragungsvorrichtung (2, 2.1 - 2.7) nach Anspruch 17, **dadurch gekennzeichnet, dass** das von der Signalübertragungsvorrichtung (2, 2.1 - 2.7) übertragene Signal eine Kennung zur Identifizierung der Signalübertragungsvorrichtung (2, 2.1 - 2.7) und/oder des mindestens einen zugeordneten Basis-Fahrmanöverbefehls (22) enthält.

19. Mobile Signalübertragungsvorrichtung (2, 2.1 - 2.7) nach Anspruch 18, **dadurch gekennzeichnet, dass** die Kennung veränderbar ist, beispielsweise durch Veränderung des von der Signalübertragungsvorrichtung (2, 2.1 - 2.7) übertragenen Signals.

20. Mobile Signalübertragungsvorrichtung (2, 2.1 - 2.7) nach einem der Ansprüche 17 bis 19, **dadurch gekennzeichnet,**
a) **dass** die Signalübertragungsvorrichtung (2, 2.1 - 2.7) als Radar-Responder (10), beispielsweise als Racon oder als reflektierender Radar-Responder (10), ausgebildet ist, der zur Identifizierung der Signalübertragungsvorrichtung (2, 2.1 - 2.7) und/oder zur Identifizierung des mindestens einen zugeordneten Basis-Fahrmanöverbefehls (22) ein charakteristisches Antwortsignal oder ein charakteristisches Echo erzeugt; und/oder
b) **dass** die Signalübertragungsvorrichtung (2, 2.1 - 2.7) einen Leitkegel, einen höhenverstellbaren Signalmast (11) und/oder eine akustisch und/oder optisch arbeitende Warneinrichtung (6) aufweist.

## Claims

1. A method for automated operation of a motor vehicle (1), wherein the motor vehicle (1) is designed to automatically carry out a predefined sequence of driving maneuvers, preferably in a region separated from general road traffic,
**characterized by:**
a) providing a plurality of basic driving maneuver commands (22) for automated operation of the motor vehicle (1);
b) providing a plurality of mobile signal transmission apparatuses (2, 2.1 - 2.7) which are designed for wireless signal transmission with the motor vehicle (1), wherein each signal transmission apparatus (2, 2.1 - 2.7) is assigned at least one basic driving maneuver command (22) and the motor vehicle (1) is designed to determine the at least one assigned basic driving maneuver command (22) from the signal transmission with one of the signal transmission apparatuses (2, 2.1 - 2.7);
c) specifying driving functions that are to be automatically carried out by the motor vehicle (1) by:
c1) selecting basic driving maneuver commands (22) from the plurality of provided basic driving maneuver commands (22) and defining the sequence thereof; and
c2) selecting signal transmission apparatuses (2, 2.1 - 2.7) from the provided signal transmission apparatuses (2, 2.1 - 2.7) corresponding to the selected basic driving maneuver commands (22) and positioning the selected signal transmission apparatuses (2, 2.1 - 2.7) according to the defined sequence of basic driving maneuver commands (22) and a target driving corridor (3) for the automated operation of the motor vehicle (1);
d) deriving the driving functions that are to be automatically carried out by the motor vehicle (1) from the wireless signal transmission between the motor vehicle (1) and the selected and positioned signal transmission apparatuses (2, 2.1 - 2.7); and
e) automated operation of the motor vehicle (1) according to the derived driving functions, wherein the sequence of the derived driving functions results from the positioning of the selected signal transmission apparatuses (2, 2.1 - 2.7).

2. The method as claimed in claim 1, **characterized**
**in that** the signal transmitted by the signal transmission apparatus (2, 2.1 - 2.7) contains an identifier for identifying the signal transmission apparatus (2, 2.1 - 2.7); and
**in that** the motor vehicle (1) is designed to determine the at least one driving maneuver command (22) assigned to a signal transmission apparatus (2, 2.1 - 2.7) by virtue of the identifier for identifying the signal transmission apparatus (2, 2.1 - 2.7) being ascertained from the signal transmission with the corresponding signal transmission apparatus (2, 2.1 - 2.7) and the at least one basic driving maneuver command (22) assigned to this identifier being determined from the ascertained identifier on the basis of a stored assignment.

3. The method as claimed in claim 2, **characterized in that** the identifier for identifying the signal transmission apparatus (2, 2.1 - 2.7) is modifiable, for example by modifying the signal transmitted by the signal transmission apparatus (2, 2.1 - 2.7).

4. The method as claimed in one of the preceding claims, **characterized in that** the deriving of the driving functions that are to be automatically carried out by the motor vehicle (1) further comprises:
a) in the event that the motor vehicle (1) receives signals from a plurality of signal transmission apparatuses (2, 2.1 - 2.7): evaluating the received signals and determining one signal transmission apparatus (2, 2.1 - 2.7) as the currently relevant signal transmission apparatus (2, 2.1 - 2.7), and
b) deriving the driving functions that are to be automatically carried out by the motor vehicle (1) from the wireless signal transmission between the motor vehicle (1) and the signal transmission apparatus (2, 2.1 - 2.7) determined as currently relevant.

5. The method as claimed in one of the preceding claims, **characterized in that** the deriving of the driving functions that are to be automatically carried out by the motor vehicle (1) further comprises:
a) detecting an environment by means of at least one environment sensor of the motor vehicle (1), and
b) checking, on the basis of the environment detection, whether an obstacle preventing the execution of the driving functions that are to be automatically carried out by the motor vehicle (1) has been ascertained.

6. The method as claimed in one of the preceding claims, **characterized in that** the basic driving maneuver commands (22) comprise:
a) a driving maneuver which causes the motor vehicle (1) to approach the signal transmission apparatus (2, 2.1 - 2.7) assigned to the basic driving maneuver command (22) in a particular way, for example to tangentially drive toward said signal transmission apparatus at a particular speed, and/or
b) a driving maneuver which effects a change in the yaw angle and/or a change in the vehicle speed and/or stopping and/or starting of the motor vehicle (1), and/or
c) an action instruction which effects control of components of the motor vehicle and/or which influences a behavior of the motor vehicle, preferably the automated operation thereof.

7. The method as claimed in one of the preceding claims, **characterized in that** the plurality of basic driving maneuver commands (22) are divided into different classes which comprise: traffic sign information and/or waypoint information which define a path in conjunction with the plurality of signal transmission apparatuses (2, 2.1 - 2.7), and/or localization information and/or action commands which initiate a process executed by the motor vehicle (1), for example the tipping of the loading area of a utility vehicle designed as a dump truck.

8. The method as claimed in one of the preceding claims, **characterized in that** the signal transmission apparatus (2, 2.1 - 2.7) is designed for wireless close-range signal transmission, preferably is embodied as a responder transmitting electromagnetic radiation.

9. The method as claimed in one of the preceding claims, **characterized in that** the signal transmission apparatus (2, 2.1 - 2.7) is designed as a radar responder (10), for example as a racon or as a reflective radar responder (10), which generates a characteristic response signal or a characteristic echo for identifying the signal transmission apparatus (2, 2.1 - 2.7) and/or for identifying the at least one assigned basic driving maneuver command (22).

10. The method as claimed in one of the preceding claims, **characterized in that** the signal transmission apparatus (2, 2.1 - 2.7) has a traffic cone, a height-adjustable signal mast (11) and/or an acoustically and/or optically working warning device (6).

11. The method as claimed in one of the preceding claims, **characterized in that** the signal transmission apparatus (2, 2.1 - 2.7) has wheels (4) or tracks for facilitating travel and/or a travel driving system.

12. The method as claimed in one of the preceding claims, **characterized in that** the signal transmission apparatus (2, 2.1 - 2.7) has a communication device (5) which is designed for communication with the other communication devices (5) or an external unit.

13. The method as claimed in claims 11 and 12, **characterized in that** the travel driving system is designed to be remote-controlled by means of control commands received via the communication device (5).

14. The method as claimed in one of the preceding claims, **characterized in that** the plurality of signal transmission apparatuses (2, 2.1 - 2.7) each have a light barrier (8) and/or a light barrier reflector (7), wherein a monitoring network of the positioned signal transmission apparatuses (2, 2.1 - 2.7) is realized by means of the light barriers (8) and/or the light barrier reflectors (7).

15. The method as claimed in claim 14, **characterized in that** in the event that the monitoring network realized by the light barriers (8) and/or light barrier reflectors (7) is passed through
a) an optical or acoustic warning signal is output by the signal transmission apparatus (2, 2.1 - 2.7) and/or
b) a warning signal is sent to the motor vehicle.

16. The method as claimed in one of the preceding claims, **characterized in that** the selected signal transmission apparatuses (2, 2.1 - 2.7) are allocated a respective absolute position and/or **in that** the signal transmission apparatus (2, 2.1 - 2.7) is designed to detect its absolute local position.

17. A mobile signal transmission apparatus (2, 2.1 - 2.7) for carrying out the method according to claim 1, that is designed for wireless signal transmission preferably with an automatically operable motor vehicle (1), wherein the signal transmission apparatus (2, 2.1 - 2.7) is assigned at least one basic driving maneuver command (22) and the signal transmission apparatus (2, 2.1 - 2.7) is designed to transmit a signal that is characteristic of the at least one assigned basic driving maneuver command (22).

18. The mobile signal transmission apparatus (2, 2.1 - 2.7) as claimed in claim 17, **characterized in that** the signal transmitted by the signal transmission apparatus (2, 2.1 - 2.7) contains an identifier for identifying the signal transmission apparatus (2, 2.1 - 2.7) and/or the at least one assigned basic driving maneuver command (22).

19. The mobile signal transmission apparatus (2, 2.1 - 2.7) as claimed in claim 18, **characterized in that** the identifier is modifiable, for example by modifying the signal transmitted by the signal transmission apparatus (2, 2.1 - 2.7).

20. The mobile signal transmission apparatus (2, 2.1 - 2.7) as claimed in one of claims 17 to 19, **characterized**
a) **in that** the signal transmission apparatus (2, 2.1 - 2.7) is designed as a radar responder (10), for example as a racon or as a reflective radar responder (10), which generates a characteristic response signal or a characteristic echo for identifying the signal transmission apparatus (2, 2.1 - 2.7) and/or for identifying the at least one assigned basic driving maneuver command (22); and/or
b) **in that** the signal transmission apparatus (2, 2.1 - 2.7) has a traffic cone, a height-adjustable signal mast (11) and/or an acoustically and/or optically working warning device (6).

## Revendications

1. Procédé de pilotage automatisé d'un véhicule à moteur (1), le véhicule à moteur (1) étant conçu pour mettre en œuvre de manière automatisée une séquence prédéfinie de manoeuvres de conduite, de préférence dans une zone séparée de la circulation routière générale, **caractérisé par** :
a) la fourniture d'une pluralité d'instructions de manoeuvre de conduite de base (22) pour un pilotage automatisé du véhicule à moteur (1) ;
b) la fourniture de multiples appareils de transmission de signal (2, 2.1 - 2.7) mobiles, qui sont conçus pour la transmission de signal sans fil au véhicule à moteur (1), au moins une instruction de manoeuvre de conduite de base (22) étant associée à chaque appareil de transmission de signal (2, 2.1 - 2.7) et le véhicule à moteur (1) étant conçu pour déterminer l'au moins une instruction de manoeuvre de conduite de base (22) associée à partir de la transmission de signal au moyen de l'un des appareils de transmission de signal (2, 2.1 - 2.7) ;
c) la spécification de fonctions de conduite devant être mises en œuvre de manière automatisée par le véhicule à moteur (1) par :
c1) la sélection d'instructions de manoeuvre de conduite de base (22) parmi les multiples instructions de manoeuvre de conduite de base (22) fournies et la définition de leur séquence ; et
c2) la sélection d'appareils de transmission de signal (2, 2.1 - 2.7) parmi les appareils de transmission de signal (2, 2.1 - 2.7) fournis d'une manière qui correspond aux instructions de manoeuvre de conduite de base (22) sélectionnées et le positionnement des appareils de transmission de signal (2, 2.1 - 2.7) sélectionnés d'une manière qui correspond à la séquence définie d'instructions de manoeuvre de conduite de base (22) et à un couloir de conduite cible (3) pour le pilotage automatisé du véhicule à moteur (1) ;
d) la déduction des fonctions de conduite devant être mises en œuvre de manière automatisée par le véhicule à moteur (1) de la transmission de signal sans fil entre le véhicule à moteur (1) et les appareils de transmission de signal (2, 2.1 - 2.7) sélectionnés et positionnés ; et
e) le pilotage automatisé du véhicule à moteur (1) selon les fonctions de conduite déduites, la séquence des fonctions de conduite déduites résultant du positionnement des appareils de transmission de signal (2, 2.1 - 2.7) sélectionnés.

2. Procédé selon la revendication 1, **caractérisé**
**en ce que** le signal transmis par l'appareil de transmission de signal (2, 2.1 - 2.7) contient un identifiant permettant l'identification de l'appareil de transmission de signal (2, 2.1 - 2.7) ; et
**en ce que** le véhicule à moteur (1) est conçu pour déterminer l'au moins une instruction de manoeuvre de conduite (22) associée à un appareil de transmission de signal (2, 2.1 - 2.7) en obtenant, à partir de la transmission de signal au moyen de l'appareil de transmission de signal (2, 2.1 - 2.7) correspondant, l'identifiant permettant l'identification de l'appareil de transmission de signal (2, 2.1 - 2.7) et en déterminant, à partir de l'identifiant obtenu, l'au moins une instruction de manoeuvre de conduite de base (22) associée à ladite identification sur la base d'une association mémorisée.

3. Procédé selon la revendication 2, **caractérisé en ce que** l'identifiant permettant l'identification de l'appareil de transmission de signal (2, 2.1 - 2.7) est modifiable, par exemple par modification du signal transmis par l'appareil de transmission de signal (2, 2.1 - 2.7).

4. Procédé selon l'une des revendications précédentes, **caractérisé en ce que** la déduction des fonctions de conduite devant être mises en œuvre de manière automatisée par le véhicule à moteur (1) comprend en outre :
a) dans le cas où le véhicule à moteur (1) reçoit des signaux en provenance de plusieurs appareils de transmission de signal (2, 2.1 - 2.7) : l'évaluation des signaux reçus et la détermination d'un appareil de transmission de signal (2, 2.1 - 2.7) comme étant l'appareil de transmission de signal (2, 2.1 - 2.7) actuellement pertinent, et
b) la déduction des fonctions de conduite devant être mises en œuvre de manière automatisée par le véhicule à moteur (1) de la transmission de signal sans fil entre le véhicule à moteur (1) et l'appareil de transmission de signal (2, 2.1 - 2.7) déterminé comme étant actuellement pertinent.

5. Procédé selon l'une des revendications précédentes, **caractérisé en ce que** la déduction des fonctions de conduite devant être mises en œuvre de manière automatisée par le véhicule à moteur (1) comprend en outre :
a) une détection de l'environnement au moyen d'au moins un capteur d'environnement du véhicule à moteur (1), et
b) la vérification du fait de savoir si, sur la base de la détection de l'environnement, un obstacle a été identifié qui s'oppose à la mise en œuvre des fonctions de conduite devant être mises en œuvre de manière automatisée par le véhicule à moteur (1).

6. Procédé selon l'une des revendications précédentes, **caractérisé en ce que** les instructions de manoeuvre de conduite de base (22) comprennent :
a) une manoeuvre de conduite qui a pour effet que le véhicule à moteur (1) s'approche de l'appareil de transmission de signal (2, 2.1 - 2.7) associé à l'instruction de manoeuvre de conduite de base (22) d'une manière déterminée, par exemple en se dirigeant tangentiellement vers celui-ci à une vitesse déterminée, et/ou
b) une manoeuvre de conduite qui a pour effet une modification de l'angle de lacet et/ou une modification de la vitesse du véhicule et/ou un arrêt et/ou un départ du véhicule à moteur (1) et/ou
c) un ordre d'action qui provoque une commande de composants du véhicule à moteur et/ou qui influence un comportement du véhicule à moteur, de préférence son pilotage automatisé.

7. Procédé selon l'une des revendications précédentes, **caractérisé en ce que** les multiples instructions de manoeuvre de conduite de base (22) sont réparties en différentes classes, qui comprennent : des informations de signalisation routière et/ou des informations de point de cheminement qui définissent un trajet en interaction avec plusieurs appareils de transmission de signal (2, 2.1 - 2.7), et/ou des informations de localisation et/ou des instructions d'action qui déclenchent un processus de travail exécuté par le véhicule à moteur (1), par exemple le basculement de la surface de chargement d'un véhicule utilitaire du type à élément de chargement basculant.

8. Procédé selon l'une des revendications précédentes, **caractérisé en ce que** l'appareil de transmission de signal (2, 2.1 - 2.7) est conçu pour la transmission de signal à courte distance sans fil, et est de préférence réalisé sous forme de répondeur transmettant un rayonnement électromagnétique.

9. Procédé selon l'une des revendications précédentes, **caractérisé en ce que** l'appareil de transmission de signal (2, 2.1 - 2.7) est conçu sous forme de répondeur radar (10), par exemple sous forme de balise radar ou de répondeur radar réfléchissant (10), qui génère un signal de réponse caractéristique ou un écho caractéristique permettant l'identification de l'appareil de transmission de signal (2, 2.1 - 2.7) et/ou permettant l'identification de l'au moins une instruction de manoeuvre de conduite de base (22) associée.

10. Procédé selon l'une des revendications précédentes, **caractérisé en ce que** l'appareil de transmission de signal (2, 2.1 - 2.7) comporte un cône de guidage, un mât de signal (11) réglable en hauteur et/ou un dispositif d'avertissement (6) fonctionnant de manière acoustique et/ou optique.

11. Procédé selon l'une des revendications précédentes, **caractérisé en ce que** l'appareil de transmission de signal (2, 2.1 - 2.7) comporte des roues (4) ou des chaînes pour le déplacement et/ou un entraînement de déplacement.

12. Procédé selon l'une des revendications précédentes, **caractérisé en ce que** l'appareil de transmission de signal (2, 2.1 - 2.7) comporte un dispositif de communication (5) qui est conçu pour communiquer avec les autres dispositifs de communication (5) ou avec une unité externe.

13. Procédé selon les revendications 11 et 12, **caractérisé en ce que** l'entraînement de déplacement est conçu pour être télécommandé au moyen d'instructions de commande reçues par l'intermédiaire du dispositif de communication (5).

14. Procédé selon l'une des revendications précédentes, **caractérisé en ce que** les multiples appareils de transmission de signal (2, 2.1 - 2.7) comportent chacun une barrière photoélectrique (8) et/ou un réflecteur de barrière photoélectrique (7), un réseau de surveillance des appareils de transmission de signal (2, 2.1 - 2.7) positionnés étant réalisé au moyen des barrières photoélectriques (8) et/ou des réflecteurs de barrières photoélectriques (7).

15. Procédé selon la revendication 14, **caractérisé en ce que**, lors d'un franchissement du réseau de surveillance réalisé par les barrières photoélectriques (8) et/ou les réflecteurs de barrières photoélectriques (7),
a) un signal d'avertissement optique ou acoustique est émis par l'appareil de transmission de signal (2, 2.1 - 2.7) et/ou
b) un signal d'avertissement est transmis au véhicule à moteur.

16. Procédé selon l'une des revendications précédentes, **caractérisé en ce qu'**une position absolue respective est attribuée aux appareils de transmission de signal (2, 2.1 - 2.7) sélectionnés et/ou **en ce que** l'appareil de transmission de signal (2, 2.1 - 2.7) est conçu pour détecter sa position absolue.

17. Appareil de transmission de signal (2, 2.1 - 2.7) mobile pour la mise en œuvre d'un procédé selon la revendication 1, qui est conçu pour la transmission de signal sans fil, de préférence à un véhicule à moteur (1) pouvant être piloté de manière automatisée, au moins une instruction de manoeuvre de conduite de base (22) étant associée à l'appareil de transmission de signal (2, 2.1 - 2.7) et l'appareil de transmission de signal (2, 2.1 - 2.7) étant conçu pour transmettre un signal caractéristique de l'au moins une instruction de manoeuvre de conduite de base (22) associée.

18. Appareil de transmission de signal (2, 2.1 - 2.7) mobile selon la revendication 17, **caractérisé en ce que** le signal transmis par l'appareil de transmission de signal (2, 2.1 - 2.7) contient un identifiant permettant l'identification de l'appareil de transmission de signal (2, 2.1 - 2.7) et/ou de l'au moins une instruction de manoeuvre de conduite de base (22) associée.

19. Appareil de transmission de signal (2, 2.1 - 2.7) mobile selon la revendication 18, **caractérisé en ce que** l'identifiant est modifiable, par exemple par modification du signal transmis par l'appareil de transmission de signal (2, 2.1 - 2.7).

20. Appareil de transmission de signal (2, 2.1 - 2.7) mobile selon l'une des revendications 17 à 19, **caractérisé**
a) **en ce que** l'appareil de transmission de signal (2, 2.1 - 2.7) est réalisé sous forme de répondeur radar (10), par exemple sous forme de balise radar ou de répondeur radar réfléchissant (10), qui génère un signal de réponse caractéristique ou un écho caractéristique permettant l'identification de l'appareil de transmission de signal (2, 2.1 - 2.7) et/ou permettant l'identification de l'au moins une instruction de manoeuvre de conduite de base (22) associée ; et/ou
b) **en ce que** l'appareil de transmission de signal (2, 2.1 - 2.7) comporte un cône de guidage, un mât de signal (11) réglable en hauteur et/ou un dispositif d'avertissement (6) fonctionnant de manière acoustique et/ou optique.
